(19) Europäisches Patentamt

European Patent Office

Office européen des brevets

(11) **EP 1 736 450 A1**

(12) **EUROPEAN PATENT APPLICATION**

(43) Date of publication:
**27.12.2006 Bulletin 2006/52**

(51) Int Cl.:
**C03C 3/04** *(2006.01)* **F41H 5/04** *(2006.01)*
**C03C 3/11** *(2006.01)*

(21) Application number: **05076450.5**

(22) Date of filing: **21.06.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(71) Applicant: **NEDERLANDSE ORGANISATIE VOOR TOEGEPAST-NATUURWETENSCHAPPELIJK ONDERZOEK TNO**
**2628 VK Delft (NL)**

(72) Inventors:
• **Dortmans, Leonardus J. M. G.**
**6716 SL Ede (NL)**
• **De Graaf, Dennis**
**5642 EN Eindhoven (NL)**

(74) Representative: **Winckels, Johannes Hubertus F. et al**
**Vereenigde,**
**Johan de Wittlaan 7**
**2517 JR Den Haag (NL)**

(54) **Oxynitride armour glass**

(57) The present invention relates to the use of an oxynitride glass comprising a glass network modifying cation as an armour material. The invention further relates to a novel oxynitride glass comprising a glass network modifying cation and to a novel method for preparing an oxynitride glass comprising a glass network modifying cation.

EP 1 736 450 A1

**Description**

The invention relates to the use of an oxynitride glass as an armour material. The invention further relates to a novel oxynitride glass.

Armour materials, in particular materials used as an anti-ballistic material need to have a high resistance against high velocity impact against bullets and/or other missiles. An indicative value to judge such resistance is the D-value, which can be calculated with the following formula:

$$D = \frac{H * E}{K^2_{Ic}} * \sqrt{\frac{E}{\rho}}$$

wherein:

H = hardness in GPa
$K_{Ic}$ = fracture toughness in MPa.m$^{1/2}$
E = Young's modulus in GPa
$\rho$ = density in g/cm$^3$

The higher the D-value the better the impact resistance. In order to get an indication of the suitability of a material as an armour material, one may determine $D_{rel}$ which is the ratio of the D-value of the material and the D-value of float glass. Thus, $D_{rel}$ for float glass is 1.0. For example, polycrystalline $\alpha$-aluminium oxide, may have a $D_{rel}$ of about 1.9, which makes it a suitable armour material. YAG ($Y_3Al_5O_{12}$) has a $D_{rel}$ of only about 1.0, whereby its performance is not better than float glass.

Transparent armour articles may be made of transparent glass or transparent ceramics. Such materials find use in e.g. transports such as cars, aircraft and boats, and in counters, boots and the like.

Known armour glasses are suitable to protect against relatively light ammunition. In order to be effective against heavier ammunition, the material needs to be thicker. Depending on the type of threat, armour glasses need to have thicknesses ranging from 5 cm to 20 cm. The dimensions and the resulting weight of these articles make the material generally undesirable and in particular unacceptable for use in helicopters and other aircraft.

Ceramic armour materials tend to be much stronger than conventional glass materials and can therefore be made into thinner articles. However, ceramic armour materials are usually more difficult to form into transparent articles of a complex shape (such as curved shapes) or large articles than armour glasses. As a result, a transparent ceramic armour tends to be very expensive.

It is an object of the invention to provide a new anti-ballistic protection glass.

In particular, it is an object of the invention to provide such a new way of providing antiballistic protection against that overcomes one or more problems encountered with known armour materials, in particular known transparent armour materials.

Further objects which may be solved by the present invention will become apparent from the description below.

It has now been found that a specific glass material is effective in serving as a armour material.

Accordingly, the present invention relates to the use of an oxynitride glass (i.e. a glass comprising oxygen, nitrogen and at least one other component) as an armour material, said glass further comprising a glass network modifying cation.

It has been found that such oxynitride glass has favourable properties as an armour material, in particular as an anti-ballistic material. The incorporated nitrogen is considered to increase the modulus of elasticity (E) and/or the hardness (H) of the material. This contributes to a higher ballistic resistance ($D_{rel}$).

Percentages used herein are atom percentages, based on the total number of atoms in the material, unless specified otherwise.

The term transparent as used herein means having the property of transmitting light such that an image can be seen through it as if there was essentially no intervening material, except possibly with the colour biased to that of the material, e.g. as in sunglasses.

The oxynitride used as an armour material usually has a relatively high D-value, when compared to float glass. Preferably the D-value is at least about as high as that of $\alpha$-alumina. The upper limit of $D_{rel}$ is not critical and may be up to 3.0 or more.

In particular oxynitrides comprising silica and/or alumina have been found suitable.

The oxynitride glass comprises a glass network modifying cation. Such cation alters the glass properties, whereby usually the flow and/or melt properties are affected, such that the glass may be processed more easy and/or into more complex shapes than in the absence thereof. In order to obtain a high D-value it is preferred that the network modifying cation is relatively small (in particular having about the same or a lower diameter than yttrium), possesses a relatively high electronegativity (in particular having about the same or a higher electronegativity than yttrium) and has an oxidation state of 2 or 3.

Particularly suitable network modifying cations are (relatively small) trivalent cations of the rare earths such as gadolinium, scandium, terbium and yttrium and bivalent ions of the alkaline earth metals such as magnesium and calcium.

Scandium, magnesium and yttrium are preferred. These components are relatively small and light and generally result in as less dense glass than when a heavier rare earth is added. Further, these components are preferred with respect to maintaining a high level of transparency. In particular, good results have been obtained with an oxynitride glass containing yttrium. In principle, terbium may be present as a network modifying cation in an armour glass with desirable transparency. The presence of terbium may result in the glass become luminescent upon exposure to UV light. This may be undesirable if the glass is used in a transport, because it may temporarily reduce transparency, e.g. by the effect of UV light shining on it. It could be a desirable effect in another application. E.g. such effect could serve an aesthetic function.

The invention further relates to an oxynitride glass, comprising aluminium, silicon and at least one network modifying cation, in particular at least one component selected from the group consisting of yttrium, magnesium, calcium, scandium, gadolinium and terbium, preferably from yttrium, magnesium and scandium.

Such glass has been found to have favourable impact resistance properties. Accordingly, it is very suitable for use as an armour glass, such as an antiballistic glass.

A glass according to the invention has further been found advantageous with respect to its processibility. The liquid phase allows easy formation of curved and complex articles. The glass usually is meltable at a temperature of about 1800 °C or less, in particular at a temperature between 1600 °C and 1800 °C.

Thus, the melting temperature is typically lower than the sintering temperature of most transparent ceramics and can be reached with conventional electric furnaces.

The oxynitride glass (used) according to the invention, in particular a glass comprising aluminium, silicon and a network modifying cation - preferably at least one of yttrium, magnesium, calcium and scandium - usually has a relatively low glass transition temperature, compared to a comparable glass without the network modifying cation. Preferably the glass transition temperature, as determined by ISO 7884-8:1987, is in the range of about 800 to about 1000 °C.

A glass (used) according to the invention preferably comprises at least 7 atom % nitrogen. More preferably the nitrogen concentration is 7 to 10 atom %. A concentration in this range has been found to contribute to a particularly favourable D-value.

The aluminium content preferably is at least 3.5 atom %, more preferably at least 6 %. In view of easy processing of the glass, the aluminium content preferably is 15 atom % or less, more preferably 12 % or less. In particular, good results have been achieved with an aluminium content in the range of 7-10 %.

The oxynitride glas usually comprises silicon in a concentration of at least 10 %, in particular of at least 13 %. For easy processing and/or good antiballistic properties, the silicon concentration is preferably 20 % or less, in particular 17 % or less.

As indicated above, a glass (used) according to the invention contains at least one network modifying cation. In principle, the concentration may be relatively low, e.g. 1 % or more. The total concentration of the network modifying cation or components - in particular one or more components selected from yttrium, magnesium, calcium and scandium, and preferably yttrium - in a glass (used) according to the invention, preferably is at least 10 %, ,more preferably at least 13 %. Preferably the concentration is 20 % or less, in particular 17 % or less.

The balance is essentially fully or predominantly formed of oxygen, which may be present in a concentration of 50 % or more. The oxygen concentration is basically determined by the concentrations of the other components that are present, as will be understood by the skilled person.

In principle, the glass may comprise further components, such as dopants. Such dopants, which are known in the art *per se,* may serve to alter the appearance of the glass, e.g. to alter the colour or lustre.

In particular for a transparent glass it is preferred that components that may form opaque precipitates in the material, such as iron (typically in the form of an iron oxide) and/or other transition metals are not present in such an amount that clouding of the glass occurs. Therefore, the glass is preferably essentially free of iron and/or other transition metals. In particular, the amount of iron and/or other transition metals is preferably less than 0.5 % more preferably less than 0.2 %, in case transparency is desired.

The invention further relates to a method for preparing an oxynitride glass, in particular a glass as described above.

Such method comprises

- mixing a silicate, an aluminate and/or an alumino-silicate, a nitrogen source and a network modifying cation source;

- melting said materials, in an inert atmosphere, thereby forming a melt;
- optionally shaping the melt; and
- allowing the melt to solidify.

Shaping and solidification are usually also carried out in an inert atmosphere; mixing usually only needs to be carried out in an inert atmosphere in case it takes place while the raw materials are molten. An inert atmosphere is an atmosphere that does not contain oxygen in a concentration that leads to substantial formation of oxide glass rather than oxynitride glass, due to a reaction of the nitrogen with oxygen at elevated temperatures. Therefore, the oxygen concentration in the atmosphere is preferably 0.1 mol % or less, in particular 0.01 mol % or less, more in particular 0.001 mol % or less . Preferably, the inert atmosphere essentially consists of nitrogen, a noble gas or a combination thereof. It is in particular preferred that the atmosphere comprises nitrogen, as its presence suppresses decomposition of the nitrides.

As a nitride source, in principle any (oxy)nitride or mixture of (oxy)nitrides may be used, in particular at least one (oxy)nitride selected from AlN, $Si_3N_4$ and AlON.

As a source for the network modifying cation, oxides of the component are in particular suitable. Other sources, such as a carbonate of the component, may be used.

In case one or more of the raw materials contain a considerable amount of iron and/or one or more other transition metals, the material may be refined to reduce the content of the transition metal(s). This may be done by means known in the art.

The preparation of the glass is preferably carried out at a temperature of about 1800 °C or less, with the proviso that the melting is carried out at a temperature at which also the highest melting component fully melts.

The materials are preferably mixed prior to melting. Mixing may suitably be performed by mechanical agitation (e.g. using a ball mill and/or an attritor mill).

In an embodiment the materials are dispersed in a dispersing medium, for instance an alcohol, in particular isopropanol.

The resulting slurry may be dried and compacted via isostatic and/or uni-axial pressing.

The mixture (such as the dried slurry) may thereafter be placed in a crucible. The crucible usually comprises an open pot made of a refractory material (such as graphite), which, on the inside, may be lined with a layer of hexagonal-boron nitride powder or another lining that helps to prevent the glass from sticking to the crucible during melting. The boron nitride is a preferred powder because the boron nitride has been found essentially not to react with (or incorporate in) the molten glass.

The (compacted) mixture may then be heated to form a homogenous melt.

The melting is preferably carried out at a temperature in the range of about 1600-1800 °C. A melting time of about 0.5-2 hours is usually sufficient, although melting may be performed for a shorter or longer duration.

The melt may then be shaped. Shaping can be done by a conventional glass working technique, such as by casting.

After solidification, the glass may be further treated. Such treatment may be carried out under an inert atmosphere, although that is not necessary.

After solidification, the glass is preferably annealed. Annealing may be carried out under an oxygen containing atmosphere such as air. This may lead to the formation of a thin oxide scale, which may be removed afterwards. For this reason, annealing is preferably carried out in an inert atmosphere.

The invention further relates to a glass article made of a oxynitride glass as described herein, in particular a glass article obtainable by a method according to the invention.

In an embodiment, the glass article comprises at least one curved surface. Such article may favourably made by a method of the invention.

In particular, the glass article may be selected from the group consisting of windows, screens, canopies and domes.

In a preferred embodiment the glass article is a laminate of at least one layer of a glass as described herein and at least one polymer layer. Such polymer layer may serve as a backing. When in use, the polymer layer is usually present at a surface of the glass layer opposite to the one from which the impact is expected. The backing thus serves to suppress breaking of the glass and/or spreading of glass shards upon impact by a projectile.

Suitable backings include layers of polymers, such as a polycarbonate or a polyurethane. It will be understood that in case, the article should be transparent, a polymer layer that is transparent should be used.

In an embodiment, the article is a laminate comprising a plurality of alternating layers of the glass and the polymer.

The invention further relates to a transport or a counter comprising a glass article according to the invention. In particular the transport may be selected from cars, buses, aircraft (planes, helicopters) and boats.

The invention will now be illustrated by the following example.

### Example

A starting powder was made from $Si_3N_4$ , $SiO_2$, $Y_2O_3$ and $Al_2O_3$. The raw oxides and nitrides were weighed-out to yield the following amounts: 15 parts Y, 8 parts Al, 54 parts O, 8 parts N and 14 parts Si.

A slurry was formed by adding approximately one part of isopropanol to one part of powder. The slurry was mixed on a roller bank ball mill using $Si_3N_4$ balls during a period of 12 hrs. The slurry heated under continuous stirring on an electric heater, until all isopropanol had evaporated. Further drying was performed in an oven at 80°C. The dried slurry was isostatically pressed at 2500 bar.. The compacted material was placed in a crucible comprising an open pot made of a refractory material (graphite), which, on the inside, was lined with a layer of hexagonal-boron nitride powder.

The compacted material and crucible were heated to a temperature of 1700 °C in a furnace to achieve a homogeneous melt. Melting was performed in an inert atmosphere (nitrogen). After the formation of the homogeneous melt the crucible with molten contents was taken out of the furnace for further processing by conventional casting followed by annealing for 1 hour at 900 °C in air.

The resulting oxynitride glass (an Y-Si-Al-O-N glass) had the following properties:

| Material | $\rho$ | H | E | $K_{Ic}$ | $D_{rel}$* |
|---|---|---|---|---|---|
| | g/cm$^3$ | GPa | GPa | MPa.m$^{0.5}$ | - |
| Y-Si-Al-O-N | 3.97 | 10.7 | 150 | 1.16 | 2.4 |
| float glass | 2.5 | 5.0 | 73.4 | 0.8 | 1.0 |
| * ratio of the D-value of the Y-Si-Al-O-N glass and the D-value of float glass | | | | | |

The density was determined by the Archimedes method, the hardness from Vickers micro-indentation, the Young's modulus was calculated from the ultrasonic sound velocities and the fracture toughness was determined from bending experiments on indented beams.

It is clear that the Y-Si-Al-O-N glass is expected to display a much better ballistic performance than float glass, as indicated by the high D-value. This is mainly due to the high hardness and Young's modulus of the Y-Si-Al-ON glass, which more than compensates for the somewhat higher density and fracture toughness. The D-value further suggests a ballistic performance which is comparable to that of ceramics, making this a competitive ballistic material.

An advantage of the oxynitride glass of the invention, such as the Y-Si-Al-O-N, over Al-O-N is that the processing of the glass is not as cumbersome. The (Y-Si-Al-O-N) glass can be formed at a moderately high temperature, typically 1800 °C or less, using a glass forming process. Transparent crystalline armour materials such as $Al_2O_3$ and Al-O-N need to be manufactured via a difficult sintering route or drawn as a single crystal from a melt, both which require substantially higher temperatures.

Further, the Y-Si-Al-O-N was found to have a relatively low glass transition temperature of less than 900 °C, which facilitates shaping into a curved form.

### Claims

1.   Use of an oxynitride glass comprising a glass network modifying cation as an armour material.

2.   Use according to claim 1, wherein the oxynitride glass comprises aluminium, silicon and at least one network modifying cation selected from the group consisting of cations of yttrium, magnesium, calcium, terbium, gadolinium and scandium, preferably yttrium.

3.   Use according claim 1 or 2, comprising in total 10 to 20 atom %, based on the total number of atoms in the material, of the network modifying cation or cations.

4.   Use according to any of the preceding claims wherein the nitrogen content is in the range of 7 to 10 atom %, based on the total number of atoms in the material.

5.   Use according to any of the preceding claims wherein the glass comprises 3.5 to 15 atom % aluminium, based on the total number of atoms in the material.

**6.** Use according to any of the preceding claims wherein the glass comprises 10 to 20 atom % silicon, based on the total number of atoms in the material.

**7.** Use according to any of the preceding claims wherein the oxynitride glass is transparent.

**8.** Oxynitride glass comprising 3.5 to 15 atom % aluminium, 7 to 10 atom % nitrogen, 10 to 20 atom % silicon and 10-20 atom % of at least one component selected from yttrium, magnesium, calcium, terbium, gadolinium and scandium, preferably yttrium.

**9.** Oxynitride glass according to claim 8, comprising 7 to 10 atom % aluminium, 7 to 9 atom % nitrogen, 13 to 17 atom % silicon and in total 13 to 17 atom % of at least one component selected from yttrium, magnesium, calcium, terbium, gadolinium and scandium, preferably yttrium.

**10.** Oxynitride glass according to claim 8 or 9, having a glass transition temperature, as determined by ISO 7884-8: 1987, in the range of about 800 to about 1000 °C.

**11.** Method for preparing an oxynitride glass, preferably as defined in any of the preceding claims, comprising

- mixing the following materials:

    a silicate, an aluminate and/or an alumino-silicate,
    a nitrogen source, and
    a network modifying cation source;

- melting said materials in an inert atmosphere, thereby forming a melt;
- optionally shaping the melt; and
- allowing the melt to solidify.

**12.** Method according to claim 11, wherein the process is carried out at a temperature of about 1800 °C or less.

**13.** Glass article made of a oxynitride glass as defined in any of the claims 2-10.

**14.** Glass article according to claim 13, wherein the article comprises at least one curved surface.

**15.** Glass article according to claim 13 or 14, selected from the group consisting of windows, screens, canopies and domes.

**16.** Glass article according to any of the claims 13-15, wherein the glass article is a composite of at least one layer of a glass according to any one of the claims 8-10 and at least one polymer layer.

**17.** Transport or counter comprising an article according to any of the claim 13-16.

**European Patent Office**

**EUROPEAN SEARCH REPORT**

Application Number

EP 05 07 6450

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MESSIER D R: "ARMY OXYNITRIDE GLASS RESEARCH" AMERICAN CERAMIC SOCIETY BULLETIN, AMERICAN CERAMIC SOCIETY. COLUMBUS, US, vol. 68, no. 11, 1 November 1989 (1989-11-01), pages 1931-1936, XP000126065 ISSN: 0002-7812 * page 1931, column 2, paragraph 2 * * page 1932, column 2 - column 3; figures 1,3 * | 1,2,7, 11-15 | C03C3/04 F41H5/04 C03C3/11 |
| Y | * page 1935; table 2 * | 3-6,16, 17 | |
| X | US 4 608 352 A (LAURENT ET AL) 26 August 1986 (1986-08-26) | 2,8-12 | |
| Y | * claims 1-8 * | 3-6 | |
| X | TREDWAY W K: "Scandium-containing oxynitride glasses" JOURNAL OF THE AMERICAN CERAMIC SOCIETY USA, vol. 68, no. 5, May 1985 (1985-05), pages C131-C133, XP009058902 ISSN: 0002-7820 * page C131, column 2, paragraph 2 - column 3, paragraph 1 * | 2,8-12 | |
| Y | * figures 1-4 * | 3-6 | TECHNICAL FIELDS SEARCHED (IPC) C03C F41H |
| X | EP 0 650 937 A (SHIMADZU CORPORATION; ASAHI FIBER GLASS CO., LTD) 3 May 1995 (1995-05-03) * claims 1-11; examples 1-4 * | 2,7-14 | |
| X | US 5 006 142 A (WEIDNER ET AL) 9 April 1991 (1991-04-09) * claim 1 * * column 5, line 29 - line 34 * | 2,8-12 | |

-/--

The present search report has been drawn up for all claims

| Place of search | Date of completion of the search | Examiner |
|---|---|---|
| Munich | 10 January 2006 | Wrba, J |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**European Patent Office**

**EUROPEAN SEARCH REPORT**

Application Number

EP 05 07 6450

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 166 102 A (DROUET ET AL) 24 November 1992 (1992-11-24) * claims 1-3; example 1 * | 2,8-12 | |
| X | DE GRAAF D ET AL: "Tb<3+> luminescence as a tool to study clustering of lanthanide ions in oxynitride glasses" JOURNAL OF NON-CRYSTALLINE SOLIDS, NORTH-HOLLAND PHYSICS PUBLISHING. AMSTERDAM, NL, vol. 325, no. 1-3, 15 September 2003 (2003-09-15), pages 29-33, XP004448246 ISSN: 0022-3093 * page 30, column 2, paragraphs 2,3 * | 2,8-12 | |
| Y | US 2004/058125 A1 (GONZALEZ RENE G ET AL) 25 March 2004 (2004-03-25) * claims 1-6 * | 16,17 | |
| A | DE GRAAF, DENNIS: "Chemistry, structure and properties or rare-earth containing Si-Al-O-N glasses" 2004, DISSERTATION, ISBN 90-386-2805-6 , TECHNISCHE UNIVERSITEIT EINDHOVEN , XP002357916 * page 85 - page 111 * | 1-12 | TECHNICAL FIELDS SEARCHED (IPC) |

The present search report has been drawn up for all claims

| Place of search | Date of completion of the search | Examiner |
|---|---|---|
| Munich | 10 January 2006 | Wrba, J |

## ANNEX TO THE EUROPEAN SEARCH REPORT
## ON EUROPEAN PATENT APPLICATION NO.

EP 05 07 6450

This annex lists the patent family members relating to the patent documents cited in  the above-mentioned European search report.
The members are as contained in the European Patent Office EDP file on
The European Patent Office is in no way liable for these particulars which are merely  given for the purpose of information.

10-01-2006

| Patent document cited in search report | | Publication date | Patent family member(s) | | Publication date |
|---|---|---|---|---|---|
| US 4608352 | A | 26-08-1986 | EP | 0178984 A1 | 23-04-1986 |
| | | | FR | 2571172 A1 | 04-04-1986 |
| | | | JP | 61086444 A | 01-05-1986 |
| EP 0650937 | A | 03-05-1995 | DE | 69401894 D1 | 10-04-1997 |
| | | | DE | 69401894 T2 | 04-09-1997 |
| | | | JP | 3425701 B2 | 14-07-2003 |
| | | | JP | 7109149 A | 25-04-1995 |
| | | | US | 5576253 A | 19-11-1996 |
| US 5006142 | A | 09-04-1991 | NONE | | |
| US 5166102 | A | 24-11-1992 | AT | 163632 T | 15-03-1998 |
| | | | DE | 69032079 D1 | 09-04-1998 |
| | | | DE | 69032079 T2 | 24-09-1998 |
| | | | DK | 424220 T3 | 28-09-1998 |
| | | | EP | 0424220 A1 | 24-04-1991 |
| | | | ES | 2115592 T3 | 01-07-1998 |
| | | | FR | 2653113 A1 | 19-04-1991 |
| | | | JP | 1927994 C | 12-05-1995 |
| | | | JP | 3183641 A | 09-08-1991 |
| | | | JP | 6045477 B | 15-06-1994 |
| US 2004058125 | A1 | 25-03-2004 | US | 2003190439 A1 | 09-10-2003 |

For more details about this annex : see Official Journal of the European Patent Office, No. 12/82